# EUROPEAN PATENT SPECIFICATION

(11) **EP 1 852 543 B1**
(45) Date of publication and mention of the grant of the patent: **24.02.2010**
(21) Application number: 06009017.2
(22) Date of filing: 02.05.2006
(51) Int. Cl.: D06F 58/28, D06F 39/00

(54) **Household appliance with program status indicator**
Haushaltgerät mit einer Programmablaufsanzeige
Appareil ménager avec un indicateur de déroulement du programme

(43) Date of publication of application: 07.11.2007
(60) Divisional application: 08021336.6
(73) Proprietor: Electrolux Home Products Corporation N.V., 1930 Zaventem (BE)
(72) Inventor: Kreutzfeldt, Uta, 92342 Freystadt (DE); Lampe, Hansjörg, 90491 Nürnberg (DE)
(74) Representative: Nardoni, Andrea

(56) References cited:
- DE-A1- 19 713 686
- GB-A- 2 265 158
- US-A1- 2005 108 326
- US-A1- 2005 212 652

## Description

The present invention relates to an appliance, in particular to a dryer, having a control unit to control a plurality of program sequences and an indicator unit indicating a program status of the appliance.

DE 102 14 794 A1 discloses a monitoring system including a detector to be arranged at a washing machine and a receiver to be carried by a user of the washing machine. The detector detects an operation state of the washing machine and transmits the status information to the remote receiver which than indicates the status to the user. The status information is an indication of the end of a washing cycle. Thus the user is informed of the end of the washing cycle while he is distant to the washing machine.

The washing machine proposed in DE 197 13 686 A1 is equipped with a transportable display device which indicates the residual duration until the cycle end of the washing program. The transportable unit can communicate with the washing machine using the power supply network of the household.

In DE 197 13 686 A1 a signal indicator for a program controlled washing machine is disclosed which is removably connected to the front panel of the wasting machine. When the signal indicator is used as a portable indicator, signal from the washing machine are remotely or via the house power network transmitted to the signal indicator. Information of the washing machine is transmitted to the signal indicator as for example information about program end or residual time until program end. Another embodiment suggests to call in the washing machine and to request its status.

The program washing machine of US 2005/0212652 A1 has a front control panel including an indicator display indicating to the user washing status information, for example the spinning speed or operation characteristics.

GB 2 265 158 A proposes a transmitter for a washing machine which is removably stored in a drawer at the machine body. The transmitter has buttons for program selections and indicators for the running status of the washing machine, for example indicators for the progress of the washing operation or an abnormal situation.

DE 199 24 648 A1 discloses a programmable washing machine wherein an actuating of a switch or the activation of a program sequence generates an acoustic signal specific for the switch or sequence. Thereby the actuation of a specific switch or sequence is distinguishable via the specific acoustic signal, e.g. for visually handicapped persons. The signal can vary in pitch, duration, repetition, tone colour or melody.

DE 100 11 774 A1 discloses a washing machine comprising a microprocessor for changing the duration of a wash program and is directed to reduce the duration of a wash program due to a more efficient washing agent, whereby the reduced duration can be compensated by an increased temperature during the wash program.

It is an object of the invention to provide an appliance having an indicator unit and a method of indicating a status which increase the user comfort.

The invention is defined in claims 1 and 8, respectively.

Particular embodiments are set out in the dependent claims.

An appliance according to claim 1 has a control unit which can control a plurality of program sequences which may differ in the type of sub sequence(s) to be controlled (in a washing machine e.g. a colored wash/a wash program for wool textiles; in a dryer e.g. a drying program for normal textiles/an anti-crease program/a program for sensitive textiles like silk) and/or in an option or parameter of the selected program sequence (temperature selection, consumption reduction, laundry load or the like). Such selections are made at a control panel of the appliance by the user for example before starting the program sequence. An indicator unit which is in communication with the appliance, in particular with the control unit of the appliance, indicates the program status of the running and/or finished and/or terminated program sequence.

According to the invention, the indication not only depends on the current status of the selected and running program sequence, but also depends on which one of the optional program sequences and/or program options has been selected by the user. Thereby the indicated program status is not independent of the selected option or sequence and more relevant information is given to the user by the indicator unit. For example the indicator unit is completely or partially inactivated for those of the selected programs or options which do not require an interaction or an immediate interaction by the user at specific occurrences during the program cycle or at the end of the program cycle. In such a case activating the indicator unit could be bothering for the user. On the other hand, if the program sequence requires and waits for interference by the user, a correspondingly obtrusive indication is given by the indicator unit to the user. Of course the intensity of indication made depend on the importance of interference necessary by the user. The informing of the user in dependency of the program sequence or option selected contributes to the quality of the appliance's working result and also improves the users comfort during the operation of the appliance.

The approaching end of a program cycle or an intermediate time of the program cycle is indicated. Thereby the user is for example informed of the state of the appliance where he can voluntarily or mandatory intervene to the program cycle of the appliance, e.g. to take interactions required at the end of the program cycle. If for example an anti-crease program has been selected for a dryer, the storing of the dried textiles within the dryer's drum after the end of the anti-crease program would result in an increasing number of crinkles or folding with the progressing storing time. So if the user is informed of the end of the drying cycle or the approaching end of the drying cycle a good time before, he can unload the dryer immediately and hang up the textiles outside the drum. Otherwise if the textiles are to be further process for example by ironing, it is not so important that the user rapidly takes out the textiles from the drum.

The way of indication is changed or modified at specific time points (intermediate time or end point of the program cycle) or when approaching a specific time point. For example the indication of a status occurrence can be indicated first in a moderate way and can be intensified during the approaching time up to the time point or with the time lapsed since the occurrence.

The indication itself can be optical, acoustical and/or mechanical and a change or modification can be made between these modes. Other types of changes are indicating different states or urgencies using different melodies, different noise levels, frequency of noise, the intensification of a mechanical vibration, a shortening of the periods of changes between different indications and so on.

In a preferred embodiment the indicator is a remote indicator unit which can communicate with the appliance or receive signals from the appliance. The communication with the control unit and/or the control panel is made for example via a fixed line, a flexible line or wireless, including a local area network, Bluetooth technique, a communication to the DECT telephone system, communication with a handy and so on.

The control panel and/or the remote indicator unit comprises an input unit where the user can perform an input in reaction to the status indicated by the indicator unit. For example when the indicator unit indicates a specific status of the appliance, an associated special program option can be activated. The special program option can then be selected by the user in reaction to the indication. By inputting this special program option or selection by the user, the running program cycle is modified by the control unit of the appliance in response to the user's special selection. For example the running program is delayed such that the end of the program sequence is later than under unmodified conditions. For example in a dryer the heater unit can be stopped such that the drying process is interrupted or deferred and the user has more time left till he has to unload the dry textiles. Alternatively or additionally a standby program is activated within the running program and/or following the finished program cycle. If for example.a main drying program for reducing the number of crinkles in the textile has been finished and the textile can not be unloaded immediately, the user can select an auxiliary anti-crease program which avoids forming crinkles due to the continued storing of the textiles in the dryer's drum.

In an embodiment the indicator unit or a dedicated portion of the indicator unit is activated for one or a portion of the plurality of program options and/or sequences selected. This means that the indicator unit is not activated for all program options and/or sequences and therefore must not be observe by the user in this case. Particularly the activation or deactivation of the indicator unit or its portion may itself be indicated to the user when selecting the program option or sequence correspondingly.

In a preferred embodiment at least two indicator units are assigned to the appliance and at least one of them is activated or deactivated in dependency of the selected program option and/or sequence. For example if the second indicator unit is a moveable, disconnectable or transportable indicator unit its operation is only required if the at least one program status has to be indicated to the user.

It is to be noted that the activation and deactivation of the indicator unit or a portion thereof as well as the way of indicating the program status may be controlled by the control unit of the appliance (preferred) and/or by the indicator unit itself. In the latter case the indicator unit comprises a corresponding processing means. For example status data and/or program or option selections are transmitted from the control unit or the panel to the indicator unit such that this data are further processed there. A user informing indication is initiated then at least partially by the indicator unit.

Reference is made in detail to a preferred embodiment of the invention, an example of which is illustrated in the accompanying drawings which show:
- Fig. 1: control elements of a dryer in communication with a remote control, and
- Fig. 2: the way of indicating a program status and a program modification in response thereto.

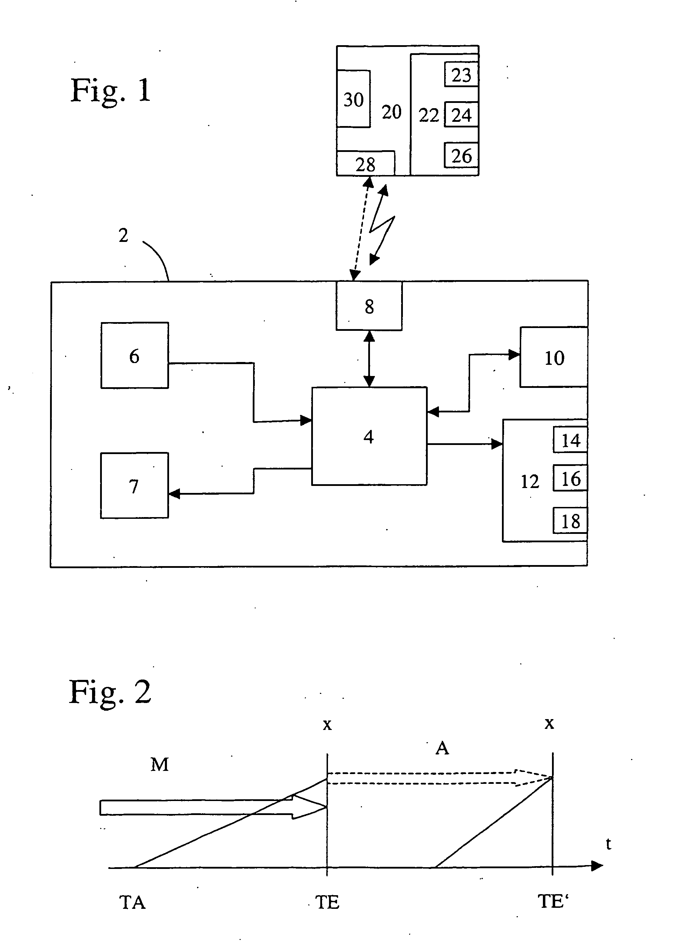

Fig. 1 shows a principle structure of control elements of a dryer 2 which is in communication with a portable remote control 20. A central processing unit (CPU) 4 of the dryer controls the program sequences of the dryer according to the selections made by a user via an operator panel 10. Detector elements like a temperature sensor 6 or a humidity sensor (not shown) are connected to the CPU 4 and are transmitting signals indicating the physical progress and conditions of the dryer during the program cycles. The CPU 4 controls active elements like a heater 7, a drum motor and a fan motor (not shown) which are operated according to the drying sequence. Current status information is transmitted from the central unit 4 to an indicator device 12 to indicate the user the current program progress related to selected status information. Optionally the status information and/or indicator activation signals are transmitted from the central unit 4 via an I/O unit 8 to the remote control 20. Information exchange between the remote control 20 and the I/O unit 8 is preferentially made contactless, alternatively a wire connection or the like may be provided.

The indicator device 12 is arranged close to or combined with operator panel 10 at an operator section of the dryer. At the indicator device 12 specific status information can be observed by the user during inputting the selected program sequence and/or program option at the operator panel 10. The indicator device 12 comprises a light indicator unit 14, a LCD display 16 and a buzzer 18.

The remote control 20 comprises an indicator section 22, a key panel 30 and an I/O unit 28 in communication with the I/O unit 8 of the dryer 2. From the dryer 2 status information is transmitted to the I/O unit 28 which is transformed to indicator signals transmitted to the indicator section 22. The other transmission way input signals are transmitted from the key panel 30 to the dryer 2. The key panel 30 for transmitting input signals from the remote control 20 to the dryer 2 is optional. The indicator section 22 comprises a light indicator 23, a buzzer 24 and a vibrator 26. The type of indicator to be activated may be optionally selected by the user (for example the buzzer 24 can be deactivated):and also depends on the status information or indicator information received from the dryer. Alternatively the indicator information may be generated completely or partially within the remote control 20 by a remote unit controller in dependency of the status data and/or indicator information received from the dryer 2.

An exemplary operation of the dryer 2 is described in connection with the time diagram of Fig. 2. After having loaded textiles into the drum of the dryer, the user selects the program sequence and options convenient for the type of textiles loaded by corresponding inputs at the operator panel 10. Central unit 4 configures the program cycle according to the selection and starts the drying program cycle. In dependency of the selection, the indication of the program status is activated or deactivated and correspondingly the central unit 4 transmits indication signals to the indicator device 12 or not. Optionally status information and/or indicator information is transmitted from the central unit 4 via I/O units 8, 28 to the remote control 20. The activation of the indicator device 12 and/or the indicator section 22 is for example made when susceptible textiles are dried and which are best unloaded from the drum of the dryer immediately or soon after the end of the program cycle. By activating device 12 and/or section 22 the user is informed of the cycle end, even if he is not in direct vicinity of the dryer.

After the selection has been made and the dryer has been started the main drying cycle M is running until the program end TE. The program end TE maybe a predefined time after the start of the main program M or may depend on the drying progress, which for example is detected using the temperature sensor 6 or the humidity sensor. Prior to the program end TE the indicator for the approaching end is activated at the indicator device 12 and/or indicator section 22. Here the indication includes an increasing indication intensity as depicted by the intensity ramp starting from TA and running to TE. The time period TE minus TA (TE-TA) is either predetermined, if there is a fixed drying time TE, or the approaching of TE is for example detected by a higher level of humidity than the end humidity level to be obtained by the main program M. The increasing intensity of indicating the approaching end may be implemented by either increasing the sound level, a frequency of sound pulses, a change from a light indication to sound indication, or the like. Not shown, the indication of the program end may be continued after the program end TE and may also increase in intensity after TE to a maximum level.

In the embodiment shown in Fig. 2, the user has not the time to unload the drum immediately at TE and he presses a button at the operator panel 10 or the key panel 30 to start (X) an add-on or auxiliary program. Here the auxiliary program is an anti-crease program A. During the anti-crease program A (between the time points TE and TE') the forming of crinkles due to storing the dry laundry in the drum is prevented. The anti-crease program A runs for a predetermined period TE'-TE and - before finishing it at TE' - again an indication process is started with an increasing intensity like the indication process starting at time point TA. Optionally, the user can start the anti-crease program A by his user input X several times to extend the anti-crease program period.

### Reference Numerals List

- 2: dryer
- 4: central unit
- 6: temperature sensor
- 7: heater
- 8: I/O unit
- 10: operator panel
- 12: indicator device
- 14: light indicator
- 16: LED display
- 18: buzzer
- 20: remote control
- 22: indicator section
- 23: light indicator
- 24: buzzer
- 26: vibrator
- 28: I/O unit
- 30: key panel
- A: anti-crease program
- M: main program
- TA: indication start
- TE, TE': program end
- X: user input

## Claims

1. Appliance, in particular dryer (2) or washing machine, comprising:
a control unit (4) adapted to control a plurality of program sequences of the appliance (2);
a control panel (10) for selecting at least one program option and/or sequence by the user, and
an indicator unit (12, 20) adapted to indicate at least one program status of the appliance and adapted to indicate the at least one program status in dependency of the at least one selected program option and/or sequence;
**characterized in that,**
the indicator unit (12,20) is adapted to change or modify the time behavior and/or the intensity of an indicator signal in dependency of an approaching end of a program cycle or an intermediate time;
the indicator unit (12, 20) is adapted to indicate the approaching to the program cycle end (TE) or the intermediate time by starting at least one indication at a predefined indication start (TA) point prior to the program cycle end (TE) or intermediate time, wherein the program cycle (M) or sequence starts prior to the predefined indication start (TA) point; and
the control panel (10) and/or a remote indicator unit (20) comprises an input unit (22) adapted to input at least one program option or sequence by the user during the running program cycle, wherein the program option or sequence selectable at least by the input unit (22) is a delay program delaying the end of a program cycle (M) and/or a standby program (A) within the running program cycle and/or following the finished program cycle (M).

2. The appliance of claim 1, wherein the indicator unit (12,20) or at least a portion of the indicator unit is activated for at least a redefined one of the plurality of program options and/or sequences.

3. The appliance of claim 1 or 2, comprising at least two indicator units (12, 20), wherein one of the indicator units or a portion of the indicator unit is activated for at least a predefined one of the plurality of program options and/or sequences.

4. The appliance of claim 1, 2 or 3, wherein the control unit (4) and/or the indicator unit (12, 20) is adapted to activate and/or deactivate the indicator unit or a portion thereof.

5. The appliance according to any of the previous claims, wherein the standby program (A) is an anti-crease program.

6. The appliance according to any of the previous claims, wherein the dependency of the at least one selected program option and/or sequence does not involve an option or sequence related the indicator unit (12, 20).

7. The appliance according to any of the previous claims, wherein the appliance is a dryer (2), a washing machine, or an oven.

8. Method of controlling an appliance, in particular an appliance according to any of the previous claims, comprising:
selecting at least one out of a plurality of program sequences and/or options of the appliance (2);
starting the program cycle according to the selected program sequence and, if applicable, according to the selected program option; and
indicating at least one program status of the appliance during the program cycle and/or at the end of the program cycle, wherein the indication of the at least one program status depends on the selection of the at least one program option and/or sequence;
**characterized by**,
the time behavior and/or the intensity of the indicator signal is changed or modified in dependency of the approaching end of the program cycle or intermediate time;
the approach to the intermediate time or a program cycle end (the) is indicated by starting at least one indication at a predefined indication start (TA) point prior to the program cycle end (TE) or intermediate time, wherein the program cycle (M) or sequence starts prior to the predefined indication start (TA) point; and
providing the option to select at least one program option or sequence during the running program cycle, wherein the program option or sequence [6/4-16] is a delay program delaying the end of the program cycle (M) and/or a standby program (A) within the running program cycle and/or following the finished program cycle (M).

9. Method of claim 8, wherein the indication is activated, modified and/or deactivated in dependency of the selection of the at least one program option and/or sequence.

## Patentansprüche

1. Vorrichtung, insbesondere Trockner- (2) oder Waschmaschine, umfassend:
eine Steuereinheit (4), die geeignet ist, eine Mehrzahl von Programmsequenzen der Vorrichtung (2) zu steuern;
ein Bedienfeld (10) zur Auswahl mindestens einer Programmoption und/oder -sequenz durch den Benutzer; und
eine Anzeigeeinheit (12, 20), die geeignet ist, mindestens einen Programmstatus der Vorrichtung anzuzeigen, und die geeignet ist, den mindestens einen Programmstatus in Abhängigkeit von der mindestens einen gewählten Programmoption und/oder -sequenz anzuzeigen;
**dadurch gekennzeichnet, dass**
die Anzeigeeinheit (12, 20) geeignet ist, das Zeitverhalten und/oder die Stärke eines Anzeigesignals in Abhängigkeit von einem nahenden Ende eines Programmzyklus oder einer Zwischenzeit zu ändern oder zu modifizieren;
die Anzeigeeinheit (12, 20) geeignet ist, die Annäherung an das Ende des Programmzyklus (TE) oder die Zwischenzeit durch das Starten mindestens einer Anzeige an einem festgelegten Anzeigestartpunkt (TA) vor dem Ende des Programmzyklus (TE) oder vor der Zwischenzeit anzuzeigen, wobei der Programmzyklus (M) oder die Sequenz vor dem festgelegten Anzeigestartpunkt (TA) startet; und
wobei das Bedienfeld (10) und/oder eine Fernanzeigeeinheit (20) eine Eingabeeinheit (22) umfasst, die so ausgeführt ist, dass mindestens eine Programmoption oder -sequenz durch den Benutzer während des laufenden Programmzyklus eingegeben werden kann, wobei die Programmoption oder -sequenz, die durch die Eingabeeinheit (22) mindestens wählbar ist, ein Verzögerungsprogramm ist, mit dem das Ende eines Programmzyklus (M) verzögert wird, und/oder ein Standby-Programm (A) innerhalb des laufenden Programmzyklus und/oder im Anschluss an den abgeschlossenen Programmzyklus (M).

2. Vorrichtung gemäß Anspruch 1, wobei die Anzeigeeinheit (12, 20) oder zumindest ein Teil der Anzeigeeinheit für mindestens eine festgelegte aus der Mehrzahl von Programmoptionen und/oder -sequenzen aktiviert ist.

3. Vorrichtung gemäß Anspruch 1 oder 2, die mindestens zwei Anzeigeeinheiten (12, 20) umfasst, wobei eine der Anzeigeeinheiten oder ein Teil der Anzeigeeinheit für mindestens eine festgelegte der Mehrzahl von Programmoptionen und/oder -sequenzen aktiviert wird.

4. Vorrichtung gemäß Anspruch 1, 2 oder 3, wobei die Steuereinheit (4) und/oder die Anzeigeeinheit (12, 20) geeignet ist, die Anzeigeeinheit oder einen Teil derselben zu aktivieren und/oder zu deaktivieren.

5. Vorrichtung gemäß einem der vorangehenden Ansprüche, wobei das Standby-Programm (A) ein Anti-Knitterprogramm ist.

6. Vorrichtung gemäß einem der vorangehenden Ansprüche, wobei die Abhängigkeit von der mindestens einen gewählten Programmoption und/oder -sequenz nicht auf eine Option oder Sequenz hinsichtlich der Anzeigeeinheit (12, 20) bezogen ist.

7. Vorrichtung gemäß einem der vorangehenden Ansprüche, wobei die Vorrichtung eine Trockenmaschine (2), eine Waschmaschine oder ein Ofen ist.

8. Verfahren zur Steuerung einer Vorrichtung, insbesondere einer Vorrichtung gemäß einem der vorangehenden Ansprüche, Folgendes umfassend:
Auswählen mindestens einer aus einer Mehrzahl von Programmsequenzen und/oder -optionen der Vorrichtung (2);
Starten des Programmzyklus gemäß der gewählten Programmsequenz und allenfalls gemäß der gewählten Programmoption; und
Anzeigen von mindestens einem Programmstatus der Vorrichtung während des Programmzyklus und/oder am Ende des Programmzyklus, wobei die Anzeige des mindestens einen Programmstatus von der Auswahl der mindestens einen Programmoption und/oder -sequenz abhängig ist;
**dadurch gekennzeichnet, dass**
das Zeitverhalten und/oder die Stärke des Anzeigesignals in Abhängigkeit von dem nahenden Ende des Programmzyklus oder der Zwischenzeit geändert oder modifiziert wird;
die Annäherung an die Zwischenzeit oder ein Programmzyklusende (TE) durch das Starten mindestens einer Anzeige an einem festgelegten Anzeigestartpunkt (TA) vor dem Programmzyklusende (TE) oder der Zwischenzeit angezeigt wird, wobei der Programmzyklus (M) oder die Sequenz vor dem angezeigten Anzeigestartpunkt (TA) startet; und
Bereitstellen der Option zur Auswahl mindestens einer Programmoption oder -sequenz während des laufenden Programmzyklus, wobei die Programmoption oder -sequenz (6/4-16) ein Verzögerungsprogramm ist, welches das Ende des Programmzyklus (M) verzögert, und/oder ein Standby-Programm (A) im laufenden Programmzyklus und/oder im Anschluss an den abgeschlossenen Programmzyklus (M).

9. Verfahren gemäß Anspruch 8, wobei die Anzeige in Abhängigkeit von der Auswahl der mindestens einen Programmoption und/oder -sequenz aktiviert, modifiziert und/oder deaktiviert wird.

## Revendications

1. Appareil, en particulier sèche-linge (2) ou lave-linge, comprenant:
une unité de commande (4) apte à commander une pluralité de séquences de programmes de l'appareil (2);
un panneau de commande (10) pour sélectionner au moins une option et/ou séquence de programme par l'utilisateur; et
une unité d'indication (12, 20) apte à indiquer au moins un état de programme de l'appareil et apte à indiquer le au moins un état de programme en fonction d'au moins une option et/ou séquence de programme sélectionnée;
**caractérisé en ce que**
l'unité d'indication (12, 20) est apte à changer ou à modifier le comportement dans le temps et/ou l'intensité d'un signal indicateur en fonction de l'approche de la fin d'un cycle de programme ou d'un temps intermédiaire;
l'unité d'indication (12, 20) est apte à indiquer l'approche de la fin du cycle de programme (TE) ou bien le temps intermédiaire en démarrant au moins une indication à un point de départ d'indication prédéfini (TA) avant la fin du cycle de programme (TE) ou du temps intermédiaire, où le cycle de programme (M) ou la séquence commence avant le point de départ d'indication prédéfini (TA); et
le panneau de commande (10) et/ou une unité d'indication à distance (20) comprend une unité d'entrée (22) apte à entrer au moins une option ou séquence de programme par l'utilisateur durant le cycle de programme en cours, où l'option ou la séquence de programme pouvant être sélectionnée au moins par l'unité d'entrée (22) est un programme de retard retardant la fin d'un cycle de programme (M) et/ou d'un programme en attente (A) dans le cycle de programme en cours et/ou faisant suite au cycle de programme fini (M).

2. Appareil selon la revendication 1, dans lequel l'unité d'indication (12, 20) ou au moins une portion de l'unité d'indication est activée pendant au moins une de la pluralité d'options et/ou de séquences de programmes.

3. Appareil selon la revendication 1 ou 2, comprenant au moins deux unités d'indication (12, 20), dans lequel une des unités d'indication ou bien une portion de l'unité d'indication est activée pendant au moins une de la pluralité d'options et/ou de séquences de programmes prédéfinies.

4. Appareil selon la revendication 1, 2 ou 3, dans lequel l'unité de commande (4) et/ou l'unité d'indication (12, 20) est apte à activer et/ou désactiver l'unité d'indication ou une partie de celle-ci.

5. Appareil selon l'une quelconque des revendications précédentes, dans lequel le programme en attente (A) est un programme infroissable.

6. Appareil selon l'une quelconque des revendications précédentes, dans lequel la dépendance d'au moins une option et/ou séquence de programme sélectionnée n'implique pas d'option ou de séquence liée à l'unité d'indication (12, 20).

7. Appareil selon l'une quelconque des revendications précédentes, dans lequel l'appareil est un séche-linge (2), un lave-linge ou un four.

8. Procédé de commande d'un appareil, en particulier d'un appareil selon l'une quelconque des revendications précédentes, comprenant:
sélectionner au moins une d'une pluralité de séquences et/ou d'options de programmes de l'appareil (2);
démarrer le cycle programme en accord avec la séquence de programme sélectionnée et, si applicable, selon l'option de programme sélectionnée; et
indiquer au moins un état de programme de l'appareil durant le cycle de programme et/ou à la fin du cycle de programme, où l'indication du au moins un état de programme dépend de la sélection de la au moins une option et/ou séquence de programme;
**caractérisé par**
le comportement dans le temps et/ou l'intensité du signal indicateur est changé ou modifié en fonction de la fin qui approche du cycle de programme ou du temps intermédiaire;
l'approche du temps intermédiaire ou d'une fin de cycle de programme (TE) est indiquée en démarrant au moins une indication à un point de départ d'indication prédéfini (TA) avant la fin du cycle de programme (TE) ou le temps intermédiaire, où le cycle (M) ou séquence de programme commence avant le point de départ d'indication prédéfini (TA); et
réaliser l'option pour sélectionner au moins une option ou séquence de programmes durant le cycle de programme en cours, où l'option ou la séquence de programme [6/4-16] est un programme de retard retardant la fin du cycle de programme (M) et/ou d'un programme en attente (A) dans le cycle de programme en cours et/ou à la suite du cycle de programme fini (M).

9. Procédé selon la revendication 8, dans lequel l'indication est activée, modifiée et/ou désactivée en fonction de la sélection de la au moins une option et/ou séquence de programme.
